Europäisches Patentamt

European Patent Office

Office européen des brevets

(19)

(11) Veröffentlichungsnummer: **0 255 019**
**B1**

# EUROPÄISCHE PATENTSCHRIFT

(12)

(45) Veröffentlichungstag der Patentschrift:
**19.12.90**

(21) Anmeldenummer: **87110500.3**

(22) Anmeldetag: **20.07.87**

(51) Int. Cl.⁵: **B23B 5/16**

(54) Selbstzentrierendes Spanngerät für eine Maschine zum mechanischen Bearbeiten der Öffnungen von Hohlkörpern.

(30) Priorität: **31.07.86 DE 8620531 U**

(43) Veröffentlichungstag der Anmeldung:
**03.02.88 Patentblatt 88/5**

(45) Bekanntmachung des Hinweises auf die Patenterteilung:
**19.12.90 Patentblatt 90/51**

(84) Benannte Vertragsstaaten:
**BE CH DE ES FR IT LI LU NL SE**

(56) Entgegenhaltungen:
EP-A- 127 053
AT-B- 224 414
DE-A- 2 541 414
DE-A- 3 402 564
US-A- 4 245 529
US-A- 4 511 153

(73) Patentinhaber: **Siemens Aktiengesellschaft,
Wittelsbacherplatz 2, D-8000 München 2(DE)**

(72) Erfinder: **Weber, Robert, Esperstrasse 23,
D-8525 Uttenreuth(DE)**
Erfinder: **Mechtold, Helmut, Am Kesselgraben 2,
D-8500 Nürnberg(DE)**

## Beschreibung

Die Erfindung bezieht sich auf ein selbstzentrierendes Spanngerät für eine Maschine zum mechanischen Bearbeiten der Öffnungen von Hohlkörpern, insbesondere von Rohrenden.

Um die Enden eines Hohlkörpers, z.B. eines Rohres oder eines Rohrbogens zu bearbeiten, werden oft Werkzeugmaschinen benutzt, die im Inneren des Hohlkörpers bzw. Rohres so festgespannt werden, daß sie zum Rohrende zentrisch ausgerichtet sind. Man verwendet Spanneinrichtungen, die Spreizvorrichtungen, wie z.B. elastische konische Tellerscheiben oder elastische, nach Art von Kolbenringen geschlitzte Ringe aufweisen. Auch bekannte sternförmig angeordnete Backensysteme sind zum Festhalten der Bearbeitungsmaschinen im Rohrinneren geeignet.

Bei den bekannten Spanneinrichtungen wird der Spreizvorgang zwangsweise vom Zentrum der Einrichtung ausgeführt, z.B. mittels axial bewegter Konusscheiben, auf denen die Spreizringe oder die Backen nach außen gleiten, bis sie an der Innenwand des Hohlkörpers bzw. Rohres anliegen. Ist die Anlagestelle des Rohres geometrisch rund und liegt sie zentrisch zum Rohrende, dann ist auch die Bearbeitungsmaschine, die später am Spanngerät aufgespannt wird, zum Rohrende hin zentrisch ausgerichtet. Dies trifft jedoch nur in wenigen Fällen zu, da bei der Fertigung der Rohre Abweichungen von der Rundheit und vom Rohrzentrum nicht zu vermeiden sind. Dabei ist zu berücksichtigen, daß die Spanneinrichtung meistens 10 cm oder mehr vom Rohrende entfernt eingesetzt wird, um eine Längsbearbeitung des Rohrinnenbereiches nicht zu behindern. Nicht geeignet sind Spanngeräte der beschriebenen Art, wenn sie an Rohrbögen ohne gerade zylindrische Enden eingesetzt werden sollen. Hier müßten sie im Bogenbereich verspannt werden. Da aber eine Verspannung der bekannten Geräte parallel zum Rohrbogenende mit Abstand von etwa 10 cm von diesem erfolgt, was bei geraden Rohren sinnvoll ist, ist der Anlagebereich der Backen bzw. der Spreizeinrichtung im Rohrbogen nicht rund und auch nicht zentrisch zum Bogenende. Kreisförmig radial zwangsgeführt nach außen gesteuerte Anlageelemente liegen nur an zwei Stellen im Bogen an, nämlich dort, wo die gegenüberliegenden Wandabstände am kleinsten sind. Dies führt dazu, daß die angesetzte Bearbeitungsmaschine bei Beanspruchung wegkippen kann, da sich nur zwei ungefähr gegenüberliegende Verspannungspunkte einstellen, über die sich die Spanneinrichtung wegdrehen kann.

Eine bekannte Spanneinrichtung, die diese Nachteile nicht aufweist, besteht aus einem rohrförmigen Körper, der mindestens drei sternförmig senkrecht zur Rohrachse angeordnete Kolben in zwei Ebenen aufweist, die mit einem Druckmedium über eine gemeinsame Versorgung nach außen bewegt werden können (E-A2 0 053 346).

Bei dieser Spanneinrichtung ist jedoch nicht mit Sicherheit gewährleistet, daß beim Verspannen alle Kolben gleichschnell nach außen bewegt werden, so daß mehr oder weniger große Abweichungen des Werkzeugträgers von der zentrischen Lage auftreten können.

Aus der EP-A 0 127 053 ist ein selbstzentrierendes Spanngerät für eine Maschine zum mechanischen Bearbeiten der Öffnungen von Rohren bekannt, bei dem ein in die Öffnung einsetzbarer Träger mit an die Hohlkörper-Innenwand andrückbaren Spanngliedern und zentrierenden Anlageflächen sowie Befestigungsmitteln für das Halteglied einer Bearbeitungsmaschine versehen ist. Diese Ausführung eignet sich nicht für Rohrkrümmer.

Das Dokument AT-B 224 414 zeigt eine Haltevorrichtung für Werkstücke, insbesondere Zylindrischer Gestalt, die aus einem Grundkörper mit einer Mehrzahl von darin radial verlaufenden Bohrungen besteht, in deren jeder ein Kolben gleitbar und flüssigkeitsdicht gelagert ist, so daß die Kolbenkopfteile radial zum Gehäusekörper stehen, während die inneren Enden der Bohrungen untereinander im Gehäusekörper zur Beaufschlagung mit einem allen Bohrungen gemeinsamen Druckmedium in Verbindung stehen. An jedem Ende des Gehäusekörpers sind getrennte koaxiale Stellungshalter zum Anfassen am Umfang des Werkstückes vorgesehen, um dieses mindestens anfänglich koaxial zum Gehäusekörpers zu legen, bis das Werkstück von den Kopfteilen der radialen Kolben erfaßt und festgehalten ist. Bei dieser bekannten Ausführung sind die beiden Stellungshalter als Ringscheiben mit kalibrierten Ansätzen ausgebildet, die nur für einen bestimmten Durchmesser des Werkstücks verwendbar sind. Für Werkstücke mit anderen Durchmessern muß eine Vielzahl von Ringscheiben vorgehalten werden. Das Auswechseln der Ringscheiben ist zeitraubend und umständlich. Um ein Kippen der Haltevorrichtung zu verhindern, ist es erforderlich, an jedem Ende der Haltevorrichtung eine Ringscheibe anzuordnen, so daß sich die bekannte Ausführung nicht für den Einsatz in Rohrbögen eignet.

Der Erfindung liegt die Aufgabe zugrunde, ein Spanngerät zur Aufnahme einer Bearbeitungsmaschine so auszubilden, daß es nach dem Verspannen im Hohlkörper zentrisch zur Hohlkörperöffnung und genau parallel zu dieser liegt und auch für ein Rohr mit am Ende angeordneten Bogen anwendbar ist.

Diese Aufgabe wird erfindungsgemäß durch ein selbstzentrierendes Spanngerät für eine Maschine zum mechanischen Bearbeiten einer Öffnung von Hohlkörpern, insbesondere von Rohren gelöst, bei dem ein in die Öffnung einsetzbarer Träger mit an die HohlkörperInnenwand andrückbaren Spanngliedern und zentrierenden Anlageflächen versehen ist, an denen mittels Befestigungsmitteln ein Aufnahmedorn und ein darauf mittels einer Führungshülse verschiebbares Spannfutter mit Stufenbacken lösbar angeordnet sind, um den in die Öffnung eingebrachten Träger mit in der Nullstellung befindlichen Spanngliedern mittels des Spannfutters an der Öffnung solange hängend zu halten, bis die Spannglieder nach außen bewegt sind und am Umfang des Hohlkörpers anliegen, und um das Spannfutter gegen eine gewünschte Bearbeitungsmaschine auszutauschen.

Mittels des Spannfutters wird eine einfache Zentrierung des Spanngerätes vor dem Andrücken der Spannglieder ermöglicht, so daß die Achse des Spanngerätes genau in der Mittenachse der Öffnung des Hohlkörpers bzw. Rohrendes liegt. Nach dem Andrücken der Spannglieder kann das Spannfutter gegen die gewünschte Bearbeitungsmaschine ausgetauscht werden, die dann zentrisch zur Rohröffnung angeordnet ist.

Soll ein Rohr mit am Ende angeordneten Bogen mechanisch bearbeitet werden, so wird das Spanngerät im Bogenbereich festgespannt. Dazu ist es günstig, zwischen den Anlageflächen des Trägers und dem Aufnahmedorn bzw. dem Halteglied einen Winkeladapter mit zentrierenden Anlageflächen für den Aufnahmedorn und zentrierenden Anlageflächen für das Halteglied anzuordnen. Dieser Winkeladapter richtet das Spanngerät zumindest annähernd fluchtend mit der Bogentangente an der Öffnung des Hohlkörpers aus. Nach dem Zentrieren mit dem Spannfutter ist die Aufnahmefläche des Winkeladapters bzw. des Halteg liedes für die Bearbeitungsmaschine rechtwinkelig und zentrisch zum Bogenende positioniert. Statt wie beim geraden Rohr am Spanngerät wird nun die Bearbeitungsmaschine an den Anlageflächen, z.B. an einem Ansatzflansch des Winkeladapters aufgespannt.

Andere vorteilhafte Ausgestaltungen der Erfindung sind in den weiteren Unteransprüchen angegeben.

Die Erfindung ist in der Zeichnung schematisch dargestellt. Darin zeigt:

Fig. 1 ein in ein gerades Rohrstück eingestztes Spanngerät mit über einen Aufnahmedorn angeordnetem Spannfutter während des Zentrierens,

Fig. 2 das in Fig. 1 gezeigte Spanngerät mit einer Bearbeitungsmaschine für das Rohrende,

Fig. 3 ein Spanngerät mit Winkeladapter für einen gebogenen Hohlkörper,

Fig. 4 und 5 unterschiedliche Winkeladapter und

Fig. 6 das in Fig. 3 gezeigte Spanngerät, an das über ein Halteglied eine Bearbeitungsmaschine für die Behälteröffnung angeschlossen ist.

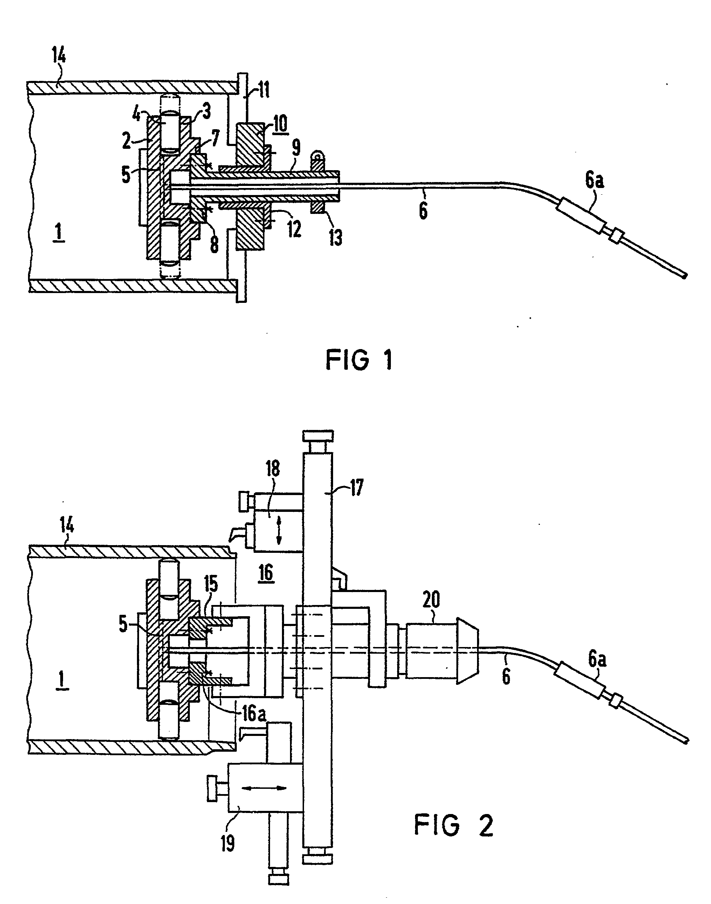

In Fig. 1 ist mit 1 ein Spanngerät bezeichnet, das einen Träger 2 besitzt, an dem sternförmig ausstellbare Spannglieder in Form von in Zylindern 3 geführten Kolben 4 vorgesehen sind. Die Zylinder 3 sind mit Kanälen 5 und Leitungen 6 für ein Druckmittel verbunden.

Am Träger 2, der mit Vorteil als Scheibe ausgebildet ist, sind zentrierende Anlageflächen 7, die z.B. durch einen Innenflansch gebildet sind und Befestigungsmittel 8 (z.B. Schraubenbolzen) für einen Aufnahmedorn 9 vorgesehen. An diesem Aufnahmedorn 9 ist ein Spannfutter 10, z.B. ein Drei-Backenfutter aufgeschoben, das mittels einer genau gearbeiteten Führungshülse 12 auf dem Aufnahmedorn gleiten kann. Ein Klemmstück 13 sichert das Spannfutter 10 gegen Herunterrutschen nach hinten.

Das Spanngerät 1 mit dem über den Aufnahmedorn 9 angeordneten Spannfutter 10 wird in die Öffnung eines Rohres 14 eingebracht. Während die Kolben 4 des Spanngerätes noch in der Nullstellung verbleiben - die Druckmittelleitung ist drucklos - werden die Backen 11 des Spannfutters 10 in bekannter Weise von Hand nach außen gekurbelt, so daß sie an den Innenumfang des Rohrendes kraftvoll angepreßt werden. Damit auch die Rechtwinkligkeit des Aufnahmedorns 9 zum Rohrende gewährleistet ist, müssen die Backen des Spannfutters, die als Stufenbacken ausgebildet sind, mit ihren Anschlagflächen auch axial satt am Rohrende anliegen. Das Spanngerät 1 hängt dann über den Aufnahmedorn am Spannfutter im Rohrende.

Der Aufnahmedorn 9 ist mit einem Kanal für die Druckleitung 6 und eventuelle Steuerleitungen versehen. Werden die Kolben 4 des Spanngerätes über die Leitung 6 mit Druck beaufschlagt, so bewegen sie sich nach außen, bis alle Kolben am Rohrumfang anliegen. Dabei wird das Spanngerät über das Spannfutter 10 in einer zentralen Position gehalten. Das Spannfutter kann nun vom Rohrende gelöst und vom Aufnahmedorn abgezogen werden. Sodann kann auch der Aufnahmedorn 9 vom Spanngerät gelöst und ebenfalls zurückgezogen werden.

Zweckmäßigerweise ist in der Druckmittelleitung 6 eine Druckabsperrvorrichtung 6a vorgesehen, die das Entkuppeln der Druckmittelleitung zur Herausnahme des Aufnahmedorns 9 und des Spannfutters 10 erlaubt, ohne daß der Druck in den Zylindern 3 des Spanngerätes absinkt. Die Kolben bleiben in der ausgestellten Position, so daß eine Bearbeitungsmaschine 16 über ein Halteglied 15 in die Druckmittelleitung eingefädelt und mit dem Spanngerät 1 über Befestigungsmittel 16a verbunden werden kann, ohne daß dieses aus seiner zentrierten Position verschoben wird. Die Bearbeitungsmaschine 16 ist nun rechtwinkelig und zentrisch zum Rohrende angebaut. Seine Mittelachse entspricht der Lage, wie sie vorher das Spannfutter 10 hatte, d.h. sie liegt im Zentrum des Rohrendes (Fig. 2).

Die Bearbeitungsmaschine besitzt zwei Dreharme 17, von denen der eine einen Radialsupport 18 und der andere z.B. einen Axialsupport 19 mit Werkzeugen trägt. Zum Antrieb dienen zwei nebeneinander angeordnete Motoren 20. Die Druckmittelleitung 6 ist durch einen Kanal im Grundkörper der Bearbeitungsmaschine 16 und durch das Halteglied 15 hindurchgeführt.

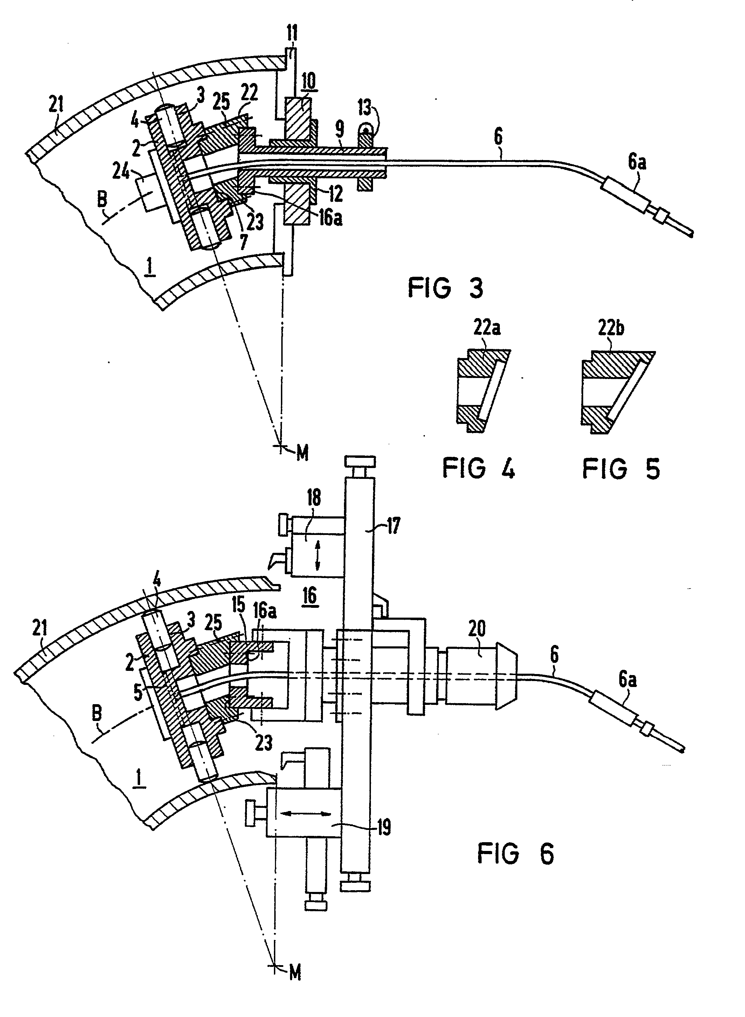

In Fig. 3 ist die Anordnung eines Spanngerätes in einem bogenförmigen Ende eines Hohlkörpers 21 gezeigt. Der mit Zylindern 3 und Kolben 4 versehene Träger 2 des Spanngerätes ist als Scheibe ausgebildet, der mit zentrierenden Anlageflächen 7 versehen ist. Um die Achse des zur Zentrierung vorgesehenen Spannfutters 10 zumindest annähernd mit der Bogentangente an der Öffnung des Hohlkörpers 21 fluchtend auszurichten, ist zwischen den Anlageflächen 7 und dem Aufnahmedorn 9 für das Spannfutter 10 ein Winkeladapter 22 mit zentrierenden Anlageflächen 23 für den Aufnahmedorn 9 angeordnet. Dieser Winkeladapter 22 wird durch Befestigungsmittel 22a gehalten.

Grundsätzlich kann für jede Bogenform, also unterschieden nach Nennweite und Biegeradius der Öffnung bzw. des Rohres ein gesonderter Winkeladapter 22a, 22b (Fig. 4, Fig. 5) benutzt werden, um das Spanngerät 1 genau zum Mittelpunkt des Biegeradius auszurichten, d.h. das Spanngerät 1 rechtwinklig zur Bogenmittellinie M anzuordnen. Die Praxis zeigt aber, daß eine geringe Abweichung von dieser idealen Lage unschädlich ist, so daß mit ein und demselben Winkeladapter eine Vielzahl von Bogenformen überspannt werden kann.

Nach dem Zentrieren des Spanngerätes 1 mit dem Spannfutter 10 kann eine Bearbeitungsmaschine 16 an den zentrierenden Anlageflächen 23, die z.B. als Innenflansch ausgebildet aufgespannt und durch Befestigungsmittel 16a gehalten werden, wie dies bereits prinzipiell zu den Figuren 1 und 2 beschrieben ist.

Für die Lagestabilität des Spanngerätes 1 in einem Rohr bzw. Hohlkörper mit Bogen ist es von Vorteil, daß der Spanndruck über die Kolben 3 durch ein Druckpotential aufgebracht wird, welches eine ständige Haftung am Hohlkörper bzw. Rohr gewährleistet, auch wenn sich die Form durch Temperaturbeaufschlagung verändert. Gegen ein Wegrutschen oder Wegschwenken des Spanngerätes 1 bei Beanspruchung wirkt im Gegensatz zu einer rein mechanischen Schraubverspannung eine ständig wirkende Anpreßkraft, so daß das Spanngerät nicht lose wird.

Die Ausbildung des Spanngerätes 1 als Scheibe hat zusätzlich zu der Vereinfachung noch den Vorteil, daß es auch an kurzen Stutzen, z.B. an Flansch- oder Anschweißstutzen bei Behältern oder Gehäusen eingesetzt werden kann und diese somit mit einem mobilen Rohrbearbeitungsgerät überarbeitet werden können. Um Haltekraftreserven zu erhalten, die bei abgesperrtem System, aber auch beim aktiven Betrieb geringe Leckagen überbrücken, kann am Spanngerät 1 ein Druckspeicher 24 angekuppelt werden (siehe Fig. 3). Damit ist auch bei Leckagen, z.B. an den Kolbendichtungen ein nur geringer Druckabfall gegeben.

**Patentansprüche**

1. Selbstzentrierendes Spanngerät für eine Maschine zum mechanischen Bearbeiten einer Öffnung von Hohlkörpern, insbesondere von Rohren, bei dem ein in die Öffnung einsetzbarer Träger (2) mit an die Hohlkörper-Innenwand andrückbaren Spanngliedern (3, 4) und zentrierenden Anlageflächen (7) versehen ist, an denen mittels Befestigungsmitteln (8) ein Aufnahmedorn (9) und ein darauf mittels einer Führungshülse (12) verschiebbares Spannfutter (10) mit Stufenbacken lösbar angeordnet sind, um den in in die Öffnung eingebrachten Träger (2) mit in der Nullstellung befindlichen Spanngliedern (3, 4) mittels des Spannfutters (10) an der Öffnung solange hängend zu halten, bis die Spannglieder (3, 4) nach außen bewegt sind und am Umfang des Hohlkörpers anliegen, und um das Spannfutter (10) gegen eine gewünschte Bearbeitungsmaschine (16) auszutauschen.

2. Spanngerät nach Anspruch 1, bei der der Träger (2) als Scheibe ausgebildet ist.

3. Spanngerät nach Anspruch 1 oder 2, bei dem der Aufnahmedorn (9) gegen ein Halteglied 15 für die Bearbeitungsmaschine (16) austauschbar ist.

4. Spanngerät nach einem der vorhergehenden Ansprüche für bogenförmige Hohlkörper- bzw. Rohrenden, bei dem zwischen den Anlageflächen (7) und dem Aufnahmedorn (9) oder dem Halteglied (15) ein Winkeladapter (22) mit zentrierenden Anlageflächen (23) für den Aufnahmedorn bzw. das Halteglied (15) angeordnet ist.

5. Spanngerät nach einem der vorhergehenden Ansprüche, bei dem der Aufnahmedorn (9), der Winkeladapter und das Halteglied (15) einen Kanal für Druckmittel und/oder Steuerleitungen aufweist.

6. Spanngerät nach einem der vorhergehenden Ansprüche, bei dem die Anlageflächen (7) als Flansch ausgebildet sind.

7. Spanngerät nach einem der vorhergehenden Ansprüche, bei dem für jede Hohlkörper-Bogenform ein gesonderter Winkeladapter (22a, 22b) vorgesehen ist.

**Revendications**

1. Appareil de serrage à centrage automatique pour une machine servant à réaliser l'usinage mécanique d'une ouverture de corps creux, notamment de tubes, et dans lequel un support (2) pouvant être inséré dans l'ouverture est pourvu d'organes de mise en tension (3, 4), qui peuvent être repoussés contre la paroi intérieure du corps creux, et de surfaces d'application (7) qui réalisent un centrage et sur lesquelles sont disposées de façon amovible, à l'aide de moyens de fixation (8), un mandrin porte-pièces (9) et un mandrin de serrage (10), qui peut être déplacé sur le mandrin porte-pièces à l'aide d'une douille de guidage (12) et comporte des mâchoires étagées, de manière à maintenir l'état suspendu contre l'ouverture, le support (2) inséré dans cette dernière, à l'aide d'organes de serrage (3, 4) situés dans la position neutre et au moyen du mandrin de serrage (10), jusqu'à ce que les organes de serrage (3, 4) soient déplacés vers l'extérieur et s'appliquent contre le pourtour du corps creux, et afin de remplacer le mandrin de serrage (10) par une machine d'usinage désirée (16).

2. Appareil de serrage suivant la revendication 1, dans lequel le support (2) est réalisé sous la forme d'un disque.

3. Appareil de serrage suivant la revendication 1 ou 2, dans lequel le mandrin porte-pièces (9) peut être remplacé par un organe de retenue (15) pour une machine d'usinage (16).

4. Appareil de serrage suivant l'une des revendications précédentes pour des extrémités coudées de corps creux ou de tubes, dans lequel entre les surfaces d'application (7) et le mandrin porte-pièces (9) ou l'organe de retenue (15) est disposé un adaptateur angulaire (22) comportant des surfaces d'application (23) réalisant un centrage, pour la broche porte-pièces ou l'organe de retenue (15).

5. Appareil de serrage suivant l'une des revendications précédentes, dans lequel la broche porte-pièces (9), l'adaptateur angulaire et l'organe de retenue (15) comportent un canal pour un fluide sous pression et/des conduites de commande.

6. Appareil de serrage suivant l'une des revendications précédentes, dans lequel les surfaces d'application (7) sont réalisées sous la forme d'une bride.

7. Appareil de serrage suivant l'une des revendications précédentes, dans lequel un adaptateur angulaire particulier (22a, 22b) est prévu pour chaque forme coudée d'un corps creux.

## Claims

1. Self-centering clamping device for a machine for the mechanical processing of an aperture of hollow bodies, in particular of tubes, in which a carrier (2), insertable into the aperture, is provided with clamping members (3, 4) which can be pressed onto the hollow body inside wall, and centering contact surfaces (7), on which surfaces a receiving spindle (9) and a clamping chuck (10) with stepped jaws, slidable onto this spindle by means of a guide sleeve (12), are detachably arranged by securing means (8), in order to keep the carrier (2), which is received in the aperture with the clamping elements (3, 4) in the initial position, suspended at the aperture by means of the clamping chuck (10), until the clamping elements (3, 4) are moved outwards and abut the periphery of the hollow body and in order to exchange the clamping chuck (10) for a desired processing machine (16).

2. Clamping device according to claim 1, in which the carrier (2) is constructed as a disc.

3. Clamping device according to claim 1 or 2, in which the receiving spindle (9) can be exchanged for a retaining element (15) for the processing machine (16).

4. Clamping device according to one of the preceding claims, for arcuate hollow body ends or tube ends, in which an angle adaptor (22) with centering contact surfaces (23) for the receiving spindle or the retaining element (15) is arranged between the contact surfaces (7) and the receiving spindle (9) or the retaining element (15).

5. Clamping device according to one of the preceding claims, in which the receiving spindle (9), the angle adaptor and the retaining element (15) have a duct for a pressure medium and/or control lines.

6. Clamping device according to one of the preceding claims, in which the contact surfaces (7) are constructed as a flange.

7. Clamping device according to one of the preceding claims, in which a separate angle adaptor (22a, 22b) is provided for each hollow body arc form.

FIG 1

FIG 2

FIG 3

FIG 4

FIG 5

FIG 6